# NEUE EUROPÄISCHE PATENTSCHRIFT

(11) **EP 1 811 795 B2**
(45) Veröffentlichungstag und Bekanntmachung des Hinweises auf die Entscheidung über den Einspruch: **16.07.2014**
(45) Hinweis auf die Patenterteilung: 13.04.2011
(21) Anmeldenummer: 07107632.7
(22) Anmeldetag: 15.02.2001
(51) Int. Cl.: H04L 29/06

(54) **Verfahren zur Übertragung von Datenpaketen**
Method for packet data transmission
Méthode pour la transmission de paquets de données

(30) Priorität: 07.03.2000 DE 10010974
(43) Veröffentlichungstag der Anmeldung: 25.07.2007
(62) Teilanmeldung aus: 01103763.7
(73) Patentinhaber: IPCom GmbH & Co. KG, 82049 Pullach (DE)
(72) Erfinder: Hans, Martin, 31162, Bad Salzdetfurth (DE); Kowalewski, Frank, 38228, Salzgitter (DE); Laumen, Josef, 81541, München (DE); Schmidt, Gunnar, 78052, Villingen-Schwenningen (DE); Baer, Siegfried, 85716, Unterschleissheim (DE); Beckmann, Mark, 38124, Braunschweig (DE)
(74) Vertreter: Gigerich, Jan

(56) Entgegenhaltungen:
- DE-A- 19 847 679
- US-A- 5 978 386
- US-A- 5 987 022

## Beschreibung

### Stand der Technik

Die Erfindung geht aus von einem Verfahren zur Übertragung von Daten nach der Gattung des unabhängigen Patentanspruchs.

Es ist bereits aus der Offenlegungsschrift DE 198 47 679 A1 bekannt, einen Algorithmus zur Komprimierung bzw. Dekomprimierung von Kontrolldaten von Datenpaketen, die über ein Mobilfunknetz übertragen werden, zu verwenden. Die Komprimierung bzw. Dekomprimierung findet in einer Protokollkonvergenzschicht statt. Solch eine Konvergenzschicht ist die SNDCP (Subnetwork Dependent
Convergence Protocol) in GSM und die PDCP (Paket Data Convergence Protocol) Schicht in UMTS (Universal Mobil Telekommunication System). Inder Beschreibung der Offenlegungsschrift wird insbesondere darauf hingewiesen, dass nur ein einzelner Kompressionsalgorithmus in Betracht gezogen wird.

Aus DE 198 47 679 A ist ein Verfahren für teilnetzabhängige Konvergenzprotokolle in Mobilfuriknetzen mit paketorientierter Datenübertragung sowie die Zuordnung und Übertragung von Zugriffspunktkennungen und Kompressionsstatusmeldungen bekannt.

US 5 987 022 A beschreibt einen Auswahlprozess zur Anwendung geeigneter Kompressionsalgorithmen in paketorientierten Datenübertragungssystemen.

### Vorteile der Erfindung

Die vorliegende Erfindung bezieht sich auf ein Verfahren zur Übertragung von Daten sowie auf eine entsprechende Sendeempfangstation gemäß den Merkmahlen der Ansprüche 1 bzw 9.

Das erfindungsgemäße Verfahren zur Übertragung von Daten mit den Merkmalen des unabhängigen Patentanspruchs hat den Vorteil, dass mehrere Kompressionsalgorithmer je nach Übertragungsart, zur Komprimierung der Kontrolldaten verwendet werden. Kriterium ist dabei, welcher Kompressionsalgorithmus am geeignetsten ist, um zu einer effizienten Datenkomprimierung zu gelangen. Dies führt zu einer erheblichen Einsparung an Übertragungsbandbreite, wenn eine optimale Datenkomprimierung vorgenommen wird.

Weiterhin ist es von Vorteil, dass, wenn unterschiedliche, für eine jeweilige Übertragungsart geeignete Algorithmen zur Komprimierung verwendet werden, einfachere Algorithmen jeweils verwendet werden, so dass weniger Rechenleistung für die Komprimierung benötigt wird. Dies spart Ressourcen in einem Mobilfunkgerät.

Durch diese einfache Auswahl eines geeigneten Komprimierungsalgorithmus wird damit in der Protokollsoftware in der Mobil- oder Basisstation ein Schalter realisiert. Dies ist eine einfache Struktur zur Auswahl eines Algorithmus.

Durch die in den unabhängigen Ansprüchen aufgeführten Maßnahmen sind vorteilhafte Weiterbildungen und Verbesserungen des im unabhängigen Anspruch angegebenen Verfahrens zur Übertragung von Daten möglich.

Besonders vorteilhaft ist, dass die Transportschicht und/oder die Netzwerkschicht den zu übertragenden Daten Kontrolldaten hinzufügen, wobei die Kontrolldaten Auskunft über die Formatierung, die Dateigröße, die Quell- und Zieladressen, die Lebensdauer des Datenpaketes, die Dienstklasse und eine Fehlererkennung geben. Das sind wichtige Daten, die für den erfolgreichen Datentransfer notwendig sind.

Weiterhin ist es von Vorteil, dass sich die Übertragungsart nach den angewendeten Protokollen richtet. Unterschiedliche Anforderungen durch vorhandene Netze, Benutzerwünsche und angeforderte Dienstklassen verlangen unterschiedliche Übertragungsarten und damit Protokolle. Daher wird auch für die unterschiedlichen Protokolle ein jeweils geeigneter Komprimierungsalgorithmus notwendig.

Darüber hinaus ist es von Vorteil, dass die Komprimierung in der Protokollkonvergenzschicht (PDCP, SNDCP) vorgenommen wird, da hier die erzeugten Daten von verschiedenen Applikationen, die auch verschiedene Übertragungsprotokolle erfahren haben, zusammenkommen. Die Protokollkonvergenzschicht gibt den Daten eine gemeinsame Form, die transparent für die Weiterverarbeitung ist.

Des Weiteren ist es von Vorteil, dass im Kopffeld eines Datenpakets, das die Kontrolldaten in Feldern umfasst, insbesondere in einem Feld "Protokoll", die Auswertung stattfindet, welche Übertragungsart und damit welcher Komprimierungsalgorithmus zu wählen ist. Dies ist eine einfache Methode, um den Softwareschalter zu realisieren, und nutzt dabei bereits vorhandenen Daten.

Weiterhin ist es von Vorteil, dass in dem Kopffeld zusätzliche Kontrolldaten, die angeben, welcher Komprimierungsalgorithmus verwendet wurde, hinzugefügt werden. Damit ist es der Protokollkonvergenzschicht in dem Empfänger möglich, in einfacher Weise zu bestimmen, welcher Komprimierungsalgorithmus zur Komprimierung der Kontrolldaten verwendet wurde und demnach welcher Dekomprimierungsalgorithmus zu wählen ist, um die Dekomprimierung der Kontrolldaten vornehmen zu können.

Darüber hinaus ist es von Vorteil, dass eine Differenzkodierung zur Komprimierung verwendet wird, die effizient und einfach zu realisieren ist.

Schließlich ist es von Vorteil, dass eine Sendeempfangsstation in einem Mobilfunknetz das erfindungsgemäße Verfahren nutzt, um so die aufgeführten Vorteile zu realisieren.

### Zeichnung

Ausführungsbeispiele der Erfindung sind in der Zeichnung dargestellt und in der nachfolgenden Beschreibung näher erläutert. Es zeigt Figur 1 das erfindungsgemäße Verfahren zur Übertragung der Daten, Figur 2 eine Korrespondenz der Schichten zwischen Sender und Empfänger, Figur 3 die Struktur des Kopffeldes und Figur 4 ein Mobilfunkübertragungssystem.

### Beschreibung

Das Mobilfunksystem GSM (Global System for Mobil Communications) ist ein zellulares Mobilfunksystem, dass vor allem im Hinblick auf die Sprachkommunikation konzipiert wurde. Insbesondere ein an einer Mobilstation zugeordneter Kanal, ist für die Dauer des gesamten Gespräches für diese Mobilstation reserviert. Dies ist daher ein leitungsvermittelter Übertragungsmodus. Neuerdings ist jedoch die reine Datenkommunikation von zunehmender Bedeutung. Die Datenkommunikation zeichnet sich jedoch im Vergleich zur Sprachkommunikation dadurch aus, dass der zu übertragende Informationsstrom, insbesondere beim Zugriff auf das Internet, blockweise durchgeführt wird, so dass eine Langzeitreservierung eines physikalischen Kanals, wie es für die Sprachkommunikation üblich ist, unwirtschaftlich wäre.

Daher wird ein auf GSM beruhender Dienst, der für Datenkommunikation geeignet ist und der als GPRS (General Paket Radio Service) bekannt ist, eingeführt. Bei GPRS wird eine dynamische Zuordnung physikalischer Kanäle zur Datenübertragung durchgeführt. Es wird dabei ein physikalischer Kanal einer Mobilstation nur dann zugeordnet, wenn zu übertragende Daten vorliegen. Liegen keine vor, wird kein physikalischer Kanal für die Kommunikation zwischen Mobilstation und Basisstation zugeordnet.

GPRS soll jedoch mit dem herkömmlichen GSM weiterarbeiten, um das vorhandene Netz sowohl für Daten als auch Sprachkommunikationen weiterhin zu nutzen. GPRS wird daher die für die GSM definierte Grundkanalstruktur nutzen. Bei GSM wird ein vorgegebenes Frequenzband in der Zeitdomäne in einer Abfolge von Rahmen unterteilt, die als TDMA (Time Division Multiple Access = Zeitmultiplex Vielfachzugriff) Rahmen bekannt sind. Die Länge eines TDMA-Rahmens beträgt 4,615 Millisekunden. Jeder TDMA-Rahmen ist seinerseits in 8 aufeinanderfolgende Schlitze gleicher Dauer unterteilt. Im herkömmlichen leitungsvermittelten Übertragungsmodus wird, wenn ein Anruf gestartet wird, ein physikalischer Kanal dadurch für diesen Anruf definiert, dass ein vorgegebener Zeitschlitz (1 - 8) in den TDMA-Rahmen reserviert wird. In ähnlicher Weise werden physikalische Kanäle zum Übertragen von Signalisierungsinformationen definiert.

Mit der Einführung von GPRS wird dadurch ein Verkehrskanal zum Übertragen von Daten geschaffen, so dass physikalische Kanäle entweder für den leitungsvermittelten Übertragungsmodus oder für den paketvermittelten Übertragungsmodus dynamisch zugeordnet werden. Wenn der Bedarf am Netzwerk für den leitungsvermittelten Übertragungsmodus hoch ist, kann für diesen Modus eine große Anzahl physikalischer Kanäle reserviert werden. Wenn dagegen der Bedarf an GPRS-Übertragung hoch ist, kann für diesen Modus eine große Anzahl physikalischer Kanäle reserviert werden. Außerdem kann ein Hochgeschwindigkeitskanal für paketvermittelte Übertragung geschaffen werden, dass in jedem TDMA-Rahmen einer einzelnen Mobilstation zwei oder mehr Schlitze zugeordnet werden.

Auch UMTS wird ein zukünftiges Mobilfunkübertragungssystem sein, dass für Datenübertragungen besonders geeignet ist, da Paketvermittlung und eine höhere Übertragungsrate als bei GSM verwendet wird. Je nach Übertragungsart werden verschiedene Protokolle in der Mobil- bzw. Basisstation verwendet. Dabei werden in der Transportschicht von GPRS bzw. UMTS, TCP (Transmission Control Protocol), UDP (User Datagram Protocol) und/oder RTP (Real Time Protocol) je nach Bedarf und Anforderung eines Benutzers und Verfügbarkeit im Mobilfunknetz angewendet. Auch in der unteren, der Transportschicht liegenden Netzwerkschicht können verschiedene Protokolle, insbesondere Internetprotokolle, verwendet werden. Die Protokolle werden je nach Anforderung eingesetzt.

Das TCP-Protokoll akzeptiert beliebig lange Nachrichten und teilt sie in Pakete auf. Die Pakete werden dann getrennt versendet. Die Pakete brauchen nicht in der richtigen Reihenfolge am Empfänger anzukommen. Für eine TCP-Datenübertragung wird zunächst ein Verbindungsaufbau durchgeführt, dann der Datentransfer und schließlich der Verbindungsabbau. Es wird eine Sendewiederholung eines Pakets durchgeführt, wenn eine fehlerhafte Übertragung des Pakets festgestellt wird.

UDP hingegen unterscheidet sich von TCP dadurch, dass keine Verbindung aufgebaut wird und keine Ankunftsgarantie gegeben werden kann. UDP weist daher wesentlich weniger Kontrolldaten in den Kopffeldern der Datenpakete auf. Für UDP wird also ein wesentlich einfacherer Algorithmus als für TCP eingesetzt.

Um den verschiedenen Anforderungen für die Komprimierung je nach verwendeten Protokollen Rechnung zu tragen, wird daher erfindungsgemäß in der Protokollkonvergenzschicht eine Entscheidung getroffen, welcher Algorithmus zur Komprimierung der Kontrolldaten für die jeweilige Übertragungsart am geeignetsten ist.

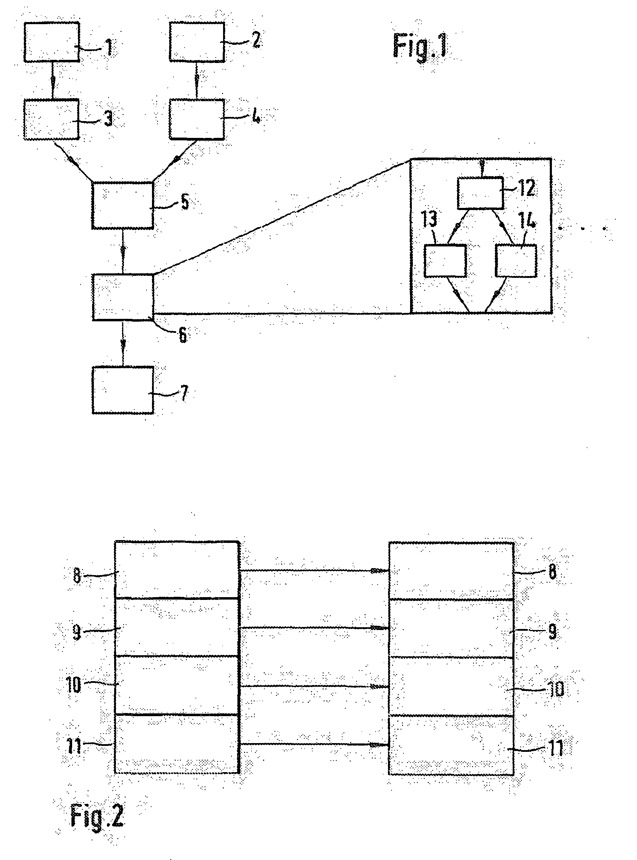

In Figur 1 ist das erfindungsgemäße Verfahren dargestellt. Es werden hier zwei Applikationen, die Applikation A 1 und die Applikation B 2, Daten erzeugen. Solche Applikationen sind hier zwei Programme zum Versenden von elektronischer Post.

Die Daten von der Applikation A 1 werden mittels des TCP 3 verarbeitet. Verarbeitet werden die Daten von der Applikation B 2 von dem UDP 4. TCP 3 und UDP 4 fügen den Daten, die nun in Datenpaketen vorliegen, Kontrolldaten hinzu.

In der Netzwerkschicht 5 werden die Datenpakete von TCP und UDP mittels verschiedener PDP (Paket Data Protocols), z. B. IP (Internet Protocol), weiterverarbeitet. Diese Protokolle fügen den Datenpaketen weitere Kontrolldaten hinzu.

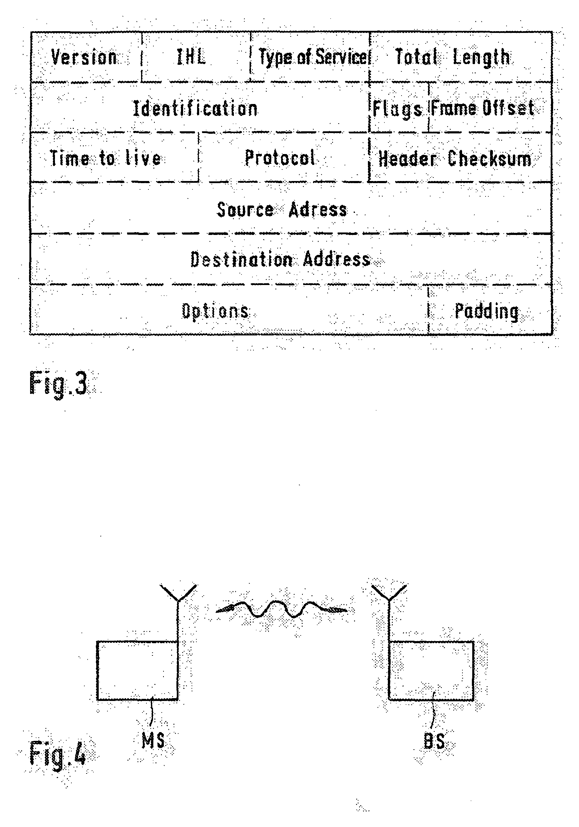

In Figur 3 ist der Kopf eines Datenpakets dargestellt. Er weist verschiedene Felder, die unterschiedliche Informationen beinhalten, auf. Das Feld "Protokoll" auf, welche Transportschichtprotokolle zur Verarbeitung dieses Datenpaketes verwendet wurden. Im Feld "Version" wird angegeben, um welche Version es sich bei dem verwendeten Internetprotokoll handelt. Es kann sich um eine Wiederholung der Übertragung des Datenpakets im Falle eines Übertragungsfehlers handeln.

Im Feld IHL wird angegeben, wie lang das Kopffeld des Paketes ist und damit, wo der Nutzanteil des Internetpakets beginnt.

Im Feld "Type of Service" wird angegeben, welche Dienstklasse für dieses Datenpaket verwendet wird. Im Feld "Total Length" wird angegeben, wie lange das gesamte Datenpaket ist. Das Feld "Identification" dient zur Identifizierung dieses Datenpaketes.

Im Feld "Flags" wird angegeben, ob das IP-Paket fragmentiert werden darf und ob es das letzte Fragment eines größeren, fragmentierten Pakets ist. Das Feld "Frame Offset" gibt für letzteren Fall an, welchen Teil eines größeren, fragmentierten Paketes das Paket beinhaltet.

Im Feld "Time-to-live" wird angegeben, nach welcher Zeit das Datenpaket zu verwerfen ist, falls es noch nicht bei seinem Empfänger angekommen ist. Damit wird vorteilhafterweise ein Datenstau durch hängengebliebene Datenpakete vermieden. Das Feld "Header Checksum" dient zur Fehlererkennung mittels einer Prüfsumme. Das Feld "Source Address" gibt die Quelladresse des Datenpaketes an, also die Station, die das Datenpaket versendet. Das Feld "Destination Address" gibt die Zieladresse der Station an, an die das Datenpaket versendet wurde.

In der Spezifikation des Internetprotokolls (IETF RFC 791) sind noch weitere, optionale Kopffelder des Internetpakets angegeben, die als eine Liste von Optionen im Feld "Options" aufgelistet werden können. Um sicherzustellen, dass die Länge des Kopffeldes des Internetpakets immer ein ganzes Vielfaches von 32 Bit beträgt, kann es nötig sein, das Kopffeld mit einem Feld "Padding" auf eine durch 32 Bit teilbare Länge mit Nullen zu füllen.

In der Konvergenzschicht 6 wird nun erfindungsgemäß anhand des Informationsfeldes, des Kopffeldes und des Datenpaketes ermittelt, welcher Algorithmus für die Komprimierung der Kopffelddaten verwendet wird. Dies geschieht im Verfahrensschritt 12. Dabei wird das Feld "Protocol" ausgewertet, indem der Inhalt mit einem abgespeichertem Wert verglichen wird, und bei einer Übereinstimmung wird entweder der Algorithmus im Verfahrensschritt 13 oder der Algorithmus im Verfahrensschritt 14 verwendet. Die Verfahrensschritte 13 und 14 laufen alternativ auf der gleichen Ebene ab.

Weist die Angabe im Feld "Protocol" keine Übereinstimmung mit abgespeicherten Werten, die einen zu verwendenden Algorithmus identifizieren, im Verfahrensschritt 12 auf, dann wird standardmäßig der Algorithmus des Verfahrensschritts 13 verwendet, da er zur Komprimierung aller Daten geeignet ist. Alternativ können noch mehr Komprimierungsalgorithmen zur Verfügung stehen. Im Verfahrensschritt 12 müssen dann nur die entsprechenden Übereinstimmungen getestet werden, um den jeweiligen Algorithmus zu identifizieren.

Die Komprimierungsalgorithmen wenden die Differenzkodierung an. Dabei wird mit einem ersten Datenpaket ein vollständiger Kopf versendet und mit den folgenden Datenpaketen nur noch eine Differenz zwischen diesem ersten Kopf und dem Kopf des aktuellen Datenpakets. Einige Felder des Kopfes eines Datenpakets für eine Übertragung bleiben gleich. Die Felder "Type of Service", "Protocol", "Source Address" und "Destination Address" können für alle Datenpakete einer Datenübertragung gleich sein, folglich müssen diese Felder nur einmal übertragen werden und zwar mit dem ersten Datenpaket. Für die übrigen Felder wird die Differenz zu dem ersten Datenpaketkopf übertragen, wobei sich die Differenz einiger Felder im wesentlichen linear ändert. Da für die Datenpakete, die nach dem ersten Datenpaket folgen, eine kleinere Datenmenge übertragen wird, ist eine Datenkomprimierung der Kopfdaten gelungen. Alternativ ist es möglich, ein bekanntes Referenzpaket mit einem definierten Kopf zu verwenden, wobei der Kopf die Daten aufweist, die für alle Datenpakete einer Datenübertragung gleich sind. Da die Felder bei TCP und UDP unterschiedlich sind, sowohl in der Anzahl als auch der Position im Kopf, sind unterschiedliche Komprimierungsalgorithmen notwendig.

Im Verfahrensschritt 7 wird in der RLC (Radio Link Control) Schicht die Steuerung der Funkübertragungsstrecke vorgenommen. Hier wird das Segmentieren und das erneute Zusammensetzen der Datenpakete vorgenommen. Nicht dargestellt sind hier nun die weiteren Schichten, zum einen die MAC (Medium Access Control) Schicht, die es ermöglicht, dass mehrere Mobilstationen ein gemeinsames Übertragungsmedium, hier die Funkübertragungsstrecke, nutzen. Die unterste Schicht ist schließlich die physikalische Schicht, die die Funkkanalübertragungsstrecke selbst ist. Hier werden also die Modulation, die Verstärkung und Versendung der Datensignale durchgeführt.

In Figur 2 ist die Korrespondenz der Schichten, die die unterschiedlichen Arbeitsschritte bei einer Übertragung der Datenpakete repräsentieren, im Sender und im Empfänger dargestellt. Die Transportschicht 8 hat hier äquivalent eine Transportschicht 8 im Empfänger. Die linke Seite symbolisiert den Sender, während die rechte Seite den Empfänger darstellt. Sowohl die Netzwerkschicht 9, die Protokollkonvergenzschicht 10 und die RLC-Schicht 11 haben jeweils ihr Äquivalent im Sender und im Empfänger. Äquivalente Schichten reagieren nur auf die Kontrolldaten, die die gegenüberliegende Schicht den Daten zugesetzt hat. Das heißt, die Kontrolldaten der Transportschicht und der Netzwerkschicht werden im Empfänger von der jeweiligen Transport- und Netzwerkschicht verarbeitet.

In Figur 3 ist ein Mobilfunkübertragungssystem dargestellt. Eine Mobilstation MS versendet und empfängt Daten zu und von einer Basisstation BS, die ebenfalls als Sendeempfangsstation wirkt. Sowohl MS als auch BS wenden das erfindungsgemäße Verfahren an.

Eine Vielzahl von Basisstationen spannt das Mobilfunknetz auf. Eine oder mehrere Basisstationen sind mit einer übergeordneten Netzwerkeinheit "Radio Network Controller" verbunden und ein oder mehrere "Radio Network Controller" sind wiederum mit einer übergeordneten Netzwerkeinheit "GPRS Support Node" verbunden. Auf diese Weise wird das Mobilfunknetz als hierarchisches Netz aus Basisstationen, "Radio Network Controllern" und "GPRS Support Nodes" betrieben.

Auch die "Radio Network Controller" und die "GPRS Support Nodes" können vorteilhafterweise das erfindungsgemäße Verfahren zur Übertragung von Daten verwenden.

## Patentansprüche

1. Verfahren zur Übertragung von Daten, wobei sendeseitig Daten erzeugt und die Daten in Datenpakete aufgeteilt werden, wobei den Datenpaketen in Abhängigkeit einer Übertragungsart Kontrolldaten hinzugefügt werden, wobei die Kontrolldaten sendeseitig komprimiert werden, wobei die Kontrolldaten empfangsseitig entsprechend der Komprimierung dekomprimiert werden, wobei empfangsseitig in Abhängigkeit von der Übertragungsart Kontrolldaten entfernt werden, wobei empfangsseitig die Datenpakete zusammengesetzt werden, **dadurch gekennzeichnet, dass** die Kontrolldaten sendeseitig im Hinblick auf die Übertragungsart ausgewertet werden und damit in Abhängigkeit von der Übertragungsart komprimiert werden, dass ein Komprimierungsalgorithmus unter mehreren Komprimierungsalgorithmen je nach Übertragungsart so ausgewählt wird, dass der ausgewählte Komprimierungsalgorithmus am geeignetsten ist, um zu einer effizienten Datenkomprimierung zu gelangen,
dass bei unterschiedlichen für die jeweilige Übertragungsart geeignetem Komprimierungsalgorithmen die jeweils einfacheren Komprimierungsalgorithmen verwendet werden, so dass weniger Rechenleistung für die Komprimierung benötigt wird, und dass den Datenpaketen die Information hinzugefügt wird, wie die Kontrolldaten komprimiert wurden.

2. Verfahren nach Anspruch 1, **dadurch gekennzeichnet, dass** die Kontrolldaten von Protokollen der Transportschicht (8) und oder der Netzwerkschicht (9) zu den Nutzdaten zugefügt werden.

3. Verfahren nach den Ansprüchen 1 und 2, **dadurch gekennzeichnet, dass** die Übertragungsart nach den angewendeten Protokollen der Transportschicht (8), insbesondere TCP, Transmission Control Protocol, UDP, User Datagram Protocol, und oder RTP, Real Time Protocol, und/oder der Netzwerkschicht, insbesondere IP, Internet Protocol, unterschieden wird.

4. Verfahren nach einem der vorherigen Ansprüche, **dadurch gekennzeichnet, dass** die Auswertung und/oder Komprimierung der Kontrolldaten in einer Protokollkonvergenzschicht, insbesondere in der PDCP, Paket Data Convergence Protocol, Schicht oder der SNDCP, Subnetwork Dependent Convergence Protocol, Schicht durchgeführt wird.

5. Verfahren nach einem der vorherigen Ansprüche, **dadurch gekennzeichnet, dass** zur Auswahl der zu verwendeten Komprimierungsart, das Informationsfeld "Protocol" im Kopffeld des IP, Internet Protocol, Datenpakets ausgewertet wird.

6. Verfahren nach einem der vorherigen Ansprüche, **dadurch gekennzeichnet, dass** sendeseitig einem komprimierten Datenpaket Kontrolldaten, insbesondere in Form eines Kopffeldes hinzugefügt werden, die die Informationen enthalten, welche Art der Komprimierung für dieses Paket verwendet wurde.

7. Verfahren nach Anspruch 6, **dadurch gekennzeichnet, dass** empfängerseitig die Information über die Art der Komprimierung ausgewertet werden, wobei die Kontrolldaten in Abhängigkeit von dieser Auswertung dekomprimiert werden.

8. Verfahren nach einem der vorherigen Ansprüche, **dadurch gekennzeichnet, dass** die Kontrolldaten mit einer Differenzkodierung komprimiert werden.

9. Sendeempfangsstation in einem Mobilfunknetz, insbesondere ein Mobilfunkgerät, Radio Network Controller, RNC, oder ein GPRS Support Node, GSN, so ausgebildet, dass es das Verfahren nach einem der vorhergehenden Ansprüche verwendet.

## Claims

1. Method for transmitting data, wherein the transmission end produces data and splits the data into data packets, wherein the data packets have control data added to them on the basis of a transmission type, wherein the control data are compressed at the transmission end, wherein the control data are decompressed at the reception end in accordance with the compression, wherein the reception end takes the transmission type as a basis for removing control data, wherein the reception end assembles the data packets, **characterized in that** the control data are evaluated at the transmission end to determine the transmission type and hence are compressed on the basis of the transmission type, **in that** a compression algorithm is selected from a plurality of compression algorithms according to transmission type such that the selected compression algorithm is most suitable for obtaining efficient data compression, **in that**, when there are different compression algorithms suitable for the respective transmission type, the simpler compression algorithms in each case are used, so that less computation power is needed for the compression, and **in that** the data packets have the information regarding how the control data were compressed added to them.

2. Method according to Claim 1, **characterized in that** the control data are added to the useful data by protocols on the transport layer (8) and/or the network layer (9).

3. Method according to Claims 1 and 2, **characterized in that** the transmission type is distinguished according to the applied protocols of the transport layer (8), particularly TCP, Transmission Control Protocol, UDP, User Datagram Protocol, and/or RTP, Real Time Protocol, and/or of the network layer, particularly IP, Internet Protocol.

4. Method according to one of the preceding claims, **characterized in that** the control data are evaluated and/or compressed in a protocol convergence layer, particularly in the PDCP, Packet Data Convergence Protocol, layer or the SNDCP, Subnetwork Dependent Convergence Protocol, layer.

5. Method according to one of the preceding claims, **characterized in that** the compression type to be used is selected by evaluating the "protocol" information field in the header of the IP, Internet Protocol, data packet.

6. Method according to one of the preceding claims, **characterized in that** the transmission end adds to a compressed data packet control data, particularly in the form of a header, which contain the information regarding what type of compression has been used for said packet.

7. Method according to Claim 6, **characterized in that** the receiver end evaluates the information about the type of compression, wherein the control data are decompressed on the basis of said evaluation.

8. Method according to one of the preceding claims, **characterized in that** the control data are compressed using differential coding.

9. Transmission/reception station in a mobile radio network, particularly a mobile radio, Radio Network Controller, RNC, or a GPRS Support Node, GSN, designed such that it uses the method according to one of the preceding claims.

## Revendications

1. Procédé de transmission de données selon lequel on génère des données du côté émission et on répartit les données en paquets de données,
on ajoute des données de contrôle aux paquets de données en fonction du type de transmission,
on comprime les données de contrôle côté émission,
on décomprime les données de contrôle côté réception en fonction de la compression,
on élimine les données de contrôle côté réception et en fonction du type de transmission,
on assemble les paquets de données côté réception, **caractérisé en ce qu'**
on analyse les données de contrôle côté émission du point de vue du type de transmission et on les comprime en fonction du type de transmission,
on sélectionne un algorithme de compression parmi plusieurs algorithmes de compression en fonction du type de transmission, de telle sorte que l'algorithme de compression sélectionné soit le plus approprié possible pour obtenir une compression efficace des données, on utilise, dans le cas de différents algorithmes de compression appropriés pour le type de transfert respectif, les algorithmes de compression les plus simples dans chaque cas, de manière à nécessiter moins de puissance de calcul pour la compression,
et on ajoute des informations aux paquets de données concernant la compression des données de contrôle.

2. Procédé selon la revendication 1,
**caractérisé en ce qu'**
on ajoute les données de contrôle de protocoles de la couche de transport (8) et/ou de la couche de réseau (9) aux données utiles.

3. Procédé selon les revendications 1 et 2, **caractérisé en ce que**
le type de transmission est différent suivant les protocoles de couche de transport (8) utilisés, notamment le protocole TCP, Transmission Control Protocol, UDP, User Datagram Protocol et RTP, Real Time Protocol, et/ou la couche de réseau, notamment IP, Internet Protocol.

4. Procédé selon l'une des revendications précédentes,
**caractérisé en ce qu'**
on analyse et/ou on comprime les données de contrôle dans une couche de convergence de protocole, notamment dans la couche PDCP, Paket Data Convergence Protocol, ou dans la couche SNDCP, Subnetwork Dependent Convergence Protocol.

5. Procédé selon l'une des revendications précédentes,
**caractérisé en ce que**
pour la sélection du type de compression utilisé, on analyse le champ d'informations « Protocol » dans le champ d'en-tête du paquet de données IP, Internet Protocol.

6. Procédé selon l'une des revendications précédentes,
**caractérisé en ce que**
on ajoute des données de contrôle, notamment sous la forme d'un champ d'en-tête, à un paquet de données comprimées, côté émission, ces données de contrôle contenant les informations relatives à la nature de la compression de ce paquet.

7. Procédé selon la revendication 6,
**caractérisé en ce qu'**
on analyse l'information concernant la nature de la compression côté réception et on décomprime les données de contrôle en fonction de cette analyse.

8. Procédé selon l'une des revendications précédentes,
**caractérisé en ce qu'**
on comprime les données de contrôle avec un décodage de différence.

9. Station émission-réception d'un réseau de téléphone mobile, notamment un appareil de téléphone mobile, un contrôleur de réseau radio RNC ou un noeud de support GPRS, GSN, réalisé de manière à
appliquer le procédé selon l'une des revendications précédentes.
